# EUROPEAN PATENT APPLICATION

(11) **EP 4 644 963 A1**
(43) Date of publication of application: **05.11.2025**
(21) Application number: 25172746.7
(22) Date of filing: 25.04.2025
(51) Int. Cl.: G02B 6/44

(54) **STRAIN RELIEF DEVICE FOR SECURING AND ORGANIZING TUBES FOR CONTAINING CABLES OR OPTICAL FIBERS**

(30) Priority: 29.04.2024 US 202463639842 P
(71) Applicant: Corning Research & Development Corporation, Corning, New York 14831 (US)
(72) Inventor: LUTTERKORDT, Ulrich, 42111 Wuppertal (DE); ZAPPEK, Andreas, 46539 Dinslaken (DE)
(74) Representative: Reddie & Grose LLP

(57) **Abstract**

A strain relief device and methods for securing and organizing tubes within an enclosure are provided herein. The device includes a first element and a second element, each having holes sized to accommodate the tubes. The elements are positioned in a stacked configuration, with the second element above the first. Horizontal displacement of one element relative to the other transitions the device between an unlocked position, allowing tube insertion or removal, and a locked position, where edges of misaligned holes press into the tubes and apply a compressive force. The device further includes a tensioning device configured to maintain the locked position, holding the compressive force, and securing the tubes. The device efficiently organizes and secures the tubes, enabling reliable network connections within the enclosure.

## Description

### PRIORITY APPLICATION

This application claims the benefit of priority of U.S. Provisional Application No. 63/639,842, filed on April 29, 2024, the content of which is relied upon and incorporated herein by reference in its entirety.

### FIELD OF THE DISCLOSURE

Embodiments of the present disclosure relate generally to network communications equipment and, more particularly, to strain relief devices and methods for securing and organizing one or more tubes containing cables or optical fibers within optical fiber distribution cabinets and other enclosures.

### BACKGROUND OF THE DISCLOSURE

In network communication equipment, optical fibers or cables are often protected within tubes, which are then routed such as between various enclosures, such as optical fiber distribution cabinets. These tubes may be pre-routed prior to the cables or optical fibers being passed therethrough for network connection. Additionally, the tubes provide an additional layer of protection for the optical fibers or cables and help organize them within the enclosures. Proper management and securing of these tubes help maintain the integrity of the optical fibers or cables and ensuring reliable network performance, while still enabling optical fiber management and changes after initial installation of the optical fiber distribution cabinet(s).

One challenge in managing tubes containing optical fibers or cables is the need to provide adequate strain relief and protection while allowing for flexibility during installation, maintenance, and reconfiguration. Traditional methods of securing tubes, such as tie-wraps or adhesive-based fasteners, can be time-consuming to install and may not provide sufficient strain relief or protection against damage. Moreover, accessing individual tubes in densely packed enclosures can be difficult without disrupting the entire bundle.

To address these issues, various strain relief devices and tube management systems have been developed. However, many of these solutions have limitations in terms of ease of use, versatility, and the level of protection they provide. Some strain relief devices may not accommodate a wide range of tube sizes, requiring different versions for different applications. Others may not provide sufficient flexibility for routing or accessing individual tubes, making maintenance and reconfigurations cumbersome.

Furthermore, existing strain relief devices may not effectively prevent movement or damage to the tubes and their enclosed optical fibers or cables under external forces, such as from vibration or pulling. This can lead to signal degradation or failures over time, particularly in harsh environments or applications where the tubes are subject to frequent disturbances.

Consequently, there is a need for an improved strain relief device that securely holds tubes containing optical fibers or cables while allowing for easy installation, removal, and adjustment. Accordingly, various embodiments detailed herein provide improved devices and methods for securing and organizing tubes containing cables or optical fibers.

### BRIEF SUMMARY OF THE DISCLOSURE

Embodiments of the present disclosure provide for various devices and methods that cure many of the above noted difficulties and challenges associated with securing and organizing tubes within optical fiber distribution cabinets and similar enclosures. In this regard, various embodiments of the present disclosure provide systems for organizing and securing tubes containing cable(s) or optical fiber(s) within an enclosure in a way that allows managing and securing tubes and for easy installation, removal, and adjustment of the tubes when the user has opened the enclosure to perform activities such as updating network services, performing maintenance, and/or performing repair activities.

As noted herein, cables or optical fibers are often routed in and out of optical fiber distribution cabinets or similar enclosures to connect with various communications equipment. These cables or optical fibers are typically bundled together in protective tubes or conduits, which need to be securely organized and managed within the cabinet to ensure reliable network performance. However, existing tube management solutions often fall short in terms of ease of use, versatility, and effectiveness. Conventional tube securing methods, such as cable/optical fiber ties or clamps, can be cumbersome to install and may require specialized tools. They often lack the flexibility to accommodate different tube sizes and configurations, leading to improper securing or even damage to the cables or optical fibers within the tubes. Moreover, these devices may not provide adequate protection against external forces, vibrations, or cable pull-out, which can lead to signal loss or network disruptions.

The devices and methods disclosed herein include a strain relief device/assembly with an organization structure that allows a user to organize and secure one or more tubes containing cables or optical fibers within the enclosure. The strain relief device may comprise a first element and a second element, each having a plurality of holes sized to accommodate the tube(s). The elements are positioned in a stacked configuration, with the second element above the first element. The first element or the second element is horizontally displaceable relative to the other between an unlocked position, allowing easy insertion or removal of the tube(s), and a locked position, where edges of the holes apply a compressive force to secure the tube(s), such as by pressing into the tube(s). A tensioning device may also be included to maintain the first element and the second element in the locked position, ensuring ongoing stability of the tube(s). Example embodiments of the strain relief device may accommodate various cabinet configurations and tube sizes, offering a modular and adaptable solution for different applications. The horizontal displacement feature enables quick and easy installation and removal of tube(s) without the need for specialized tools to allow for easy access during, e.g., maintenance activities. Moreover, depending on the configuration, a single element or portion thereof may be used to provide instant strain relief to multiple tubes at one time (such as tubes positioned in a row or a plurality of rows). The compressive force applied by the holes in the locked position ensures a strong hold on the tube(s), preventing accidental pull-out or damage caused by external forces or vibrations.

In an example embodiment, a strain relief device is provided for securing a plurality of tubes within an optical fiber distribution cabinet. Each of the plurality of tubes comprises an outer wall surrounding an inner hollow opening configured to contain at least one of a cable or an optical fiber therethrough. The strain relief device includes a first element comprising a top surface and a bottom surface, wherein the first element comprises a plurality of holes that each extend from the top surface to the bottom surface, wherein each of the plurality of holes comprises a diameter larger than an outer diameter of each of the plurality of tubes. The strain relief device also includes a second element comprising a top surface and a bottom surface, wherein the bottom surface of the second element is positioned above of the top surface of the first element. The second element comprises a plurality of holes that each extend from the top surface to the bottom surface, wherein each of the plurality of holes comprises a diameter larger than the outer diameter of each of the plurality of tubes. The first element or the second element of the strain relief device is also movable horizontally relative to the other of the first element or the second element between an unlocked position and a locked position, wherein, when in the unlocked position, the plurality of holes of the first element and the plurality of holes of the second element are aligned to enable insertion or removal of the plurality of tubes in corresponding aligned holes of the plurality of holes of the first element and the plurality of holes of the second element. When in the locked position, the first element or the second element is displaced horizontally relative to the other of the first element or the second element such that the plurality of holes of the first element and the plurality of holes of the second element apply a compressive force on the outer wall of each of the plurality of tubes inserted therethrough to secure the each of the plurality of tubes therein. Additionally, the strain relief device includes a tensioning device configured to transition the first element or the second element between the unlocked position and the locked position by adjusting the horizontal position of the first element or the second element relative to the other of the first element or the second element, wherein the tensioning device is further configured to maintain the first element or the second element in the locked position.

In some embodiments, when the first element or the second element of the strain relief device is in a locked position, the tensioning device secures the first element and the second element in the locked position. The locked position maintains the compressive force on each of the plurality of tubes to prevent movement of each of the plurality of tubes in response to external forces.

In some embodiments, when the first element or the second element of the strain relief device is in a locked position, the tensioning device enables a portion of each of the plurality of tubes extending above the top surface of the second element to bend or curve. The bending or curving of the plurality of tubes allows for insertion of the at least one of the cable or the optical fiber into the inner hollow opening.

In some embodiments, when the first element or the second element of the strain relief device is in the unlocked position, the tensioning device allows the first element or the second element to be displaced horizontally relative to the other of the first element or the second element. The unlocked position reduces the compressive force on each of the plurality of tubes to enable removal, adjustment, or reinsertion of each of the plurality of tubes.

In some embodiments, when the first element or the second element of the strain relief device is in the locked position, an edge of each of the plurality of holes of the first element and an edge of each of the plurality of holes of the second element press into the outer wall of each of the plurality of tubes.

In some embodiments, the edge of each of the plurality of holes of the first element and the second element of the strain relief device cut into the outer wall of each of the plurality of tubes to secure each of the plurality of tubes in a fixed position.

In some embodiments, the tensioning device of the strain relief device is accessible from the front of the optical fiber distribution cabinet.

In some embodiments, the strain relief device comprises a bottom plate wherein the bottom plate comprises a top surface, a bottom surface, a front side, and a rear side. The bottom plate further includes a plurality of openings extending from the top surface to the bottom surface for receiving the plurality of tubes.

In some embodiments, the top surface of the bottom plate of the strain relief device is positioned below the bottom surface of the first element of the strain relief device.

In another example embodiment, a strain relief device is provided for securing a plurality of tubes within an optical fiber distribution cabinet. Each of the plurality of tubes comprises an outer wall surrounding an inner hollow opening configured to contain at least one of a cable or an optical fiber therethrough. The strain relief device includes a first element comprising a top surface and a bottom surface, wherein the first element comprises a plurality of holes that each extend from the top surface to the bottom surface, wherein each of the plurality of holes comprises a diameter larger than an outer diameter of each of the plurality of tubes. The plurality of holes of the first element are arranged in at least one row within the first element. The strain relief device also includes a second element comprising a top surface and a bottom surface, wherein the bottom surface of the second element is positioned above of the top surface of the first element. The second element comprises a plurality of holes that each extend from the top surface to the bottom surface, wherein each of the plurality of holes comprises a diameter larger than the outer diameter of each of the plurality of tubes. The first element or the second element of the strain relief device is also movable horizontally relative to the other of the first element or the second element between an unlocked position and a locked position, wherein, when in the unlocked position, the plurality of holes of the first element and the plurality of holes of the second element are aligned to enable insertion or removal of the plurality of tubes in corresponding aligned holes of the plurality of holes of the first element and the plurality of holes of the second element. When in the locked position, the first element or the second element is displaced horizontally relative to the other of the first element or the second element such that the plurality of holes of the first element and the plurality of holes of the second element apply a compressive force on the outer wall of each of the plurality of tubes inserted therethrough to secure the each of the plurality of tubes therein.

In some embodiments, when the first element or the second element of the strain relief device is in a locked position, a tensioning device secures the first element and the second element in the locked position. The locked position maintains the compressive force on each of the plurality of tubes to prevent movement of each of the plurality of tubes in response to external forces.

In some embodiments, when the first element or the second element of the strain relief device is in a locked position, the tensioning device enables a portion of each of the plurality of tubes extending above the top surface of the second element to bend or curve. The bending or curving of the plurality of tubes allows for insertion of the at least one of the cable or the optical fiber into the inner hollow opening.

In some embodiments, when the first element or the second element of the strain relief device is in the unlocked position, the tensioning device allows the first element or the second element to be displaced horizontally relative to the other of the first element or the second element. The unlocked position reduces the compressive force on each of the plurality of tubes to enable removal, adjustment, or reinsertion of each of the plurality of tubes.

In some embodiments, when the first element or the second element of the strain relief device is in the locked position, an edge of each of the plurality of holes of the first element and an edge of each of the plurality of holes of the second element press into the outer wall of each of the plurality of tubes.

In some embodiments, the edge of each of the plurality of holes of the first element and the second element of the strain relief device cut into the outer wall of each of the plurality of tubes to secure each of the plurality of tubes in a fixed position.

In some embodiments, the tensioning device of the strain relief device is accessible from the front of the optical fiber distribution cabinet.

In another example embodiment, a strain relief device is provided for securing a plurality of tubes within an optical fiber distribution cabinet. Each of the plurality of tubes comprises an outer wall surrounding an inner hollow opening configured to contain at least one of a cable or an optical fiber therethrough. The strain relief device includes a first element comprising a top surface and a bottom surface, wherein the first element comprises a plurality of holes that each extend from the top surface to the bottom surface, wherein each of the plurality of holes comprises a diameter larger than an outer diameter of each of the plurality of tubes. The strain relief device also includes a second element comprising a top surface and a bottom surface, wherein the bottom surface of the second element is positioned above of the top surface of the first element. The second element comprises a plurality of holes that each extend from the top surface to the bottom surface, wherein each of the plurality of holes comprises a diameter larger than the outer diameter of each of the plurality of tubes. The first element or the second element of the strain relief device is also movable horizontally relative to the other of the first element or the second element between an unlocked position and a locked position, wherein, when in the unlocked position, the plurality of holes of the first element and the plurality of holes of the second element are aligned to enable insertion or removal of the plurality of tubes in corresponding aligned holes of the plurality of holes of the first element and the plurality of holes of the second element. When in the locked position, the first element or the second element is displaced horizontally relative to the other of the first element or the second element such that the plurality of holes of the first element and the plurality of holes of the second element apply a compressive force on the outer wall of each of the plurality of tubes inserted therethrough to secure the each of the plurality of tubes therein. Additionally, the strain relief device includes a tensioning device configured to maintain the first element or the second element in the locked position. When the first element or the second element is in the locked position, the tensioning device secures the first element and the second element in the locked position to maintain the compressive force on each of the plurality of tubes.

In some embodiments, when the first element or the second element of the strain relief device is in a locked position, the tensioning device enables a portion of each of the plurality of tubes extending above the top surface of the second element to bend or curve. The bending or curving of the plurality of tubes allows for insertion of the at least one of the cable or the optical fiber into the inner hollow opening.

In some embodiments, when the first element or the second element of the strain relief device is in the locked position, an edge of each of the plurality of holes of the first element and an edge of each of the plurality of holes of the second element press into the outer wall of each of the plurality of tubes.

In some embodiments, the edge of each of the plurality of holes of the first element and the second element of the strain relief device cut into the outer wall of each of the plurality of tubes to secure each of the plurality of tubes in a fixed position preventing movement of each of the plurality of tubes in response to external forces.

In another example embodiment, a strain relief device is provided for securing a plurality of tubes within an optical fiber distribution cabinet. Each of the plurality of tubes comprises an outer wall surrounding an inner hollow opening configured to contain at least one of a cable or an optical fiber therethrough. The strain relief device includes a first element comprising a top surface and a bottom surface, wherein the first element comprises a plurality of holes that each extend from the top surface to the bottom surface, wherein each of the plurality of holes comprises a diameter larger than an outer diameter of each of the plurality of tubes. The plurality of holes is arranged in at least one row on the top surface of the first element. The strain relief device also includes a second element comprising a top surface and a bottom surface, wherein the bottom surface of the second element is positioned above of the top surface of the first element. The second element comprises a plurality of holes that each extend from the top surface to the bottom surface, wherein each of the plurality of holes comprises a diameter larger than the outer diameter of each of the plurality of tubes. The first element or the second element of the strain relief device is also movable horizontally relative to the other of the first element or the second element between an unlocked position and a locked position, wherein, when in the unlocked position, the plurality of holes of the first element and the plurality of holes of the second element are aligned to enable insertion or removal of the plurality of tubes in corresponding aligned holes of the plurality of holes of the first element and the plurality of holes of the second element. When in the locked position, the first element or the second element is displaced horizontally relative to the other of the first element or the second element such that the plurality of holes of the first element and the plurality of holes of the second element apply a compressive force on the outer wall of each of the plurality of tubes inserted therethrough to secure the each of the plurality of tubes therein. Additionally, the strain relief device includes a tensioning device configured to transition the first element or the second element between the unlocked position and the locked position by adjusting the horizontal position of the first element or the second element relative to the other of the first element or the second element, wherein the tensioning device is further configured to maintain the first element or the second element in the locked position.

In some embodiments, when the first element or the second element of the strain relief device is in a locked position, the tensioning device secures the first element and the second element in the locked position. The locked position maintains the compressive force on each of the plurality of tubes to prevent movement of each of the plurality of tubes in response to external forces.

In some embodiments, when the first element or the second element of the strain relief device is in a locked position, the tensioning device enables a portion of each of the plurality of tubes extending above the top surface of the second element to bend or curve. The bending or curving of the plurality of tubes allows for insertion of the at least one of the cable or the optical fiber into the inner hollow opening.

In some embodiments, when the first element or the second element of the strain relief device is in the unlocked position, the tensioning device allows the first element or the second element to be displaced horizontally relative to the other of the first element or the second element. The unlocked position reduces the compressive force on each of the plurality of tubes to enable removal, adjustment, or reinsertion of each of the plurality of tubes.

In another example embodiment, a method for securing a plurality of tubes is provided. The method comprises providing a strain relief device comprising a first element having a plurality of holes, and a second element having a plurality of holes. The method also includes displacing the first element or the second element horizontally relative to the other of the first element or second element to an unlocked position to align the plurality of holes of the first element and the plurality of holes of the second element. The method further includes inserting the plurality of tubes through the aligned holes of the first element and the second element, wherein each of the plurality of tubes comprises an outer wall surrounding an inner hollow opening configured to contain at least one of a cable or an optical fiber. The method further includes displacing the first element or the second element horizontally relative to the other of the first element or the second element to a locked position. When in the locked position, the plurality of holes of the first element and the plurality of holes of the second element apply a compressive force on the outer wall of each of the plurality of tubes inserted therethrough to secure the each of the plurality of tubes therein. The method further includes engaging a tensioning device to maintain the first element and the second element in the locked position to secure the plurality of tubes within the strain relief device.

### BRIEF DESCRIPTION OF THE DRAWINGS

Having thus described embodiments of the present disclosure in general terms, reference will now be made to the accompanying drawings, which are not necessarily drawn to scale, and wherein:
FIG. 1 shows an example communication network layout, in accordance with some embodiments disclosed herein;
FIG. 2 illustrates a perspective view of an optical fiber distribution cabinet with a strain relief device and an example tube installed through the strain relief device, with the tube having cable or optical fiber running therethrough, the cable or optical fiber having come from a cable/optical fiber management panel, in accordance with some embodiments discussed herein;
FIG. 3 illustrates a perspective view of the optical fiber distribution cabinet of FIG. 2 with an example bending of another example tube to receive cable or optical fiber, in accordance with some embodiments discussed herein;
FIG. 4 illustrates a perspective view of the strain relief device of FIGs. 2-3, in accordance with some embodiments discussed herein;
FIG. 5 illustrates a schematic cross-sectional side view taken along Line 5-5 from FIG. 4, where the tube is inserted through the strain relief device and, in accordance with some embodiments discussed herein;
FIG. 6 illustrates an exploded view of the strain relief device, in accordance with some embodiments discussed herein;
FIG. 7 illustrates a perspective view of the first element of the strain relief device, in accordance with some embodiments discussed herein;
FIG. 8 illustrates a perspective view of the second element of the strain relief device, in accordance with some embodiments discussed herein;
FIG. 9 illustrates a perspective view of the first element and second element of the strain relief device transitioning between an unlocked position and a locked position, in accordance with some embodiments discussed herein;
FIG. 10 illustrates a schematic cross-sectional side view of FIG. 5 of the tube being secured in the strain relief device, wherein the strain relief device is in a locked position, in accordance with some embodiments discussed herein;
FIG. 11 illustrates a perspective view of an alternative embodiment of the first element as a U-part element of a strain relief assembly, in accordance with some embodiments discussed herein;
FIG. 12 illustrates a perspective view of an example embodiment of a strain relief device with the U-part element of FIG. 11, in accordance with some embodiments discussed herein; and
FIG. 13 shows a flowchart of an example method of using the strain relief device.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Devices and methods according to the present disclosure allow an installer to configure tubes for containing cables, optical fibers, or other communications equipment in an improved manner, such as by enabling the installer to organize and secure tubes within an enclosure using a strain relief device. In this regard, in some embodiments, example devices are able to secure tubes that are within a range of tube diameters without requiring the installer to use additional tools (or to achieve using minimal tools). Further, in some embodiments, example devices may additionally prevent axial torsion (e.g., pulling forces) from damaging the tubes containing cables, optical fibers, or other communications equipment at the point of connection.

The presently described devices and methods may provide improved compliance by offering a simple method of securing tubes within optical fiber distribution cabinets or other enclosures. This can prevent or limit signal loss as well as protect the integrity of the entire network.

Further, the presently described devices and methods incorporate simple management and organization of the tubes into its design. The alignment of tubes within the strain relief device that lead into an enclosure avoids cluttering the enclosure and/or tangling of the tubes. In addition, the presently described devices may facilitate ease of access, as authorized personnel may also make changes to the communications equipment setup relatively easily. Similarly, tubes may be secured, adjusted, and replaced easily.

Due in part to its extremely wide bandwidth and low noise operation, optical fiber is increasingly being used for a variety of applications, including but not limited to broadband voice, video, and data transmission. Optical fiber optic communications networks may include a number of interconnection points (such as at which multiple optical fibers are interconnected) and/or connection terminals (e.g., network access point (NAP) enclosures, optical network terminals (ONTs), network interface devices (NIDs)). Accordingly, corresponding optical fiber optic cables may be managed (e.g., routed through, split, reconfigured, connected, etc.) in many different communications equipment cabinets and other enclosures, some of which may include one or more splice trays.

The connection terminals may be used to extend optical fiber optic communications services to a subscriber. In this regard, optical fiber optic networks may deliver "fiber-to-the-curb" (FTTC), "fiber-to-the-business" (FTTB), "fiber-to-the-home" (FTTH) and "fiber-to-the-premises" (FTTP), referred to generically as "FTTx". For example, delivering services to subscribers in the last mile connection may occur indoors. Different kinds of buildings may require complicated cabling systems, which can include many separated cables, each one connecting one subscriber. Installation may include making each of the many separated cables connect between a main distribution point (*e.g.,* in the basement or elsewhere in the building) and the end user. Each connection may require a different length and/or diameter of cable, so variations in cable tensions and routing may introduce further tangling or complexities into what may be an already crowded enclosure. Moreover, modifications after initial installation may be required (*e.g.,* due to building or subscriber changes), requiring the installer to re-enter the enclosure and quickly make adjustments to cables or optical fibers or tubes containing cables or optical fibers within, which may cause axial strain on cables during cable management activities.

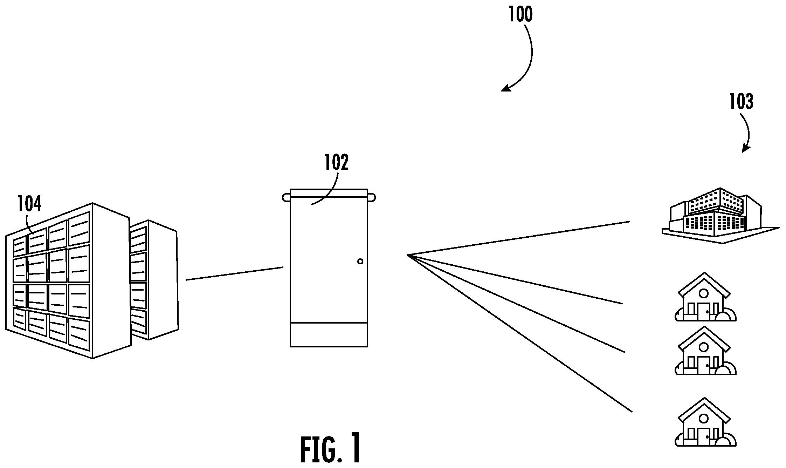

FIG. 1 illustrates an example communication network 100 that includes a optical fiber distribution cabinet 102. The communication network 100 is used, for example, to deliver broadband network access to end users 103, such as homes and businesses, for various applications and services. The network may employ various architectures and technologies to efficiently distribute data and signals to the end users 103. The communication network 100 may also include the data center/headend 104, which serves as the central point for generating, processing, and distributing data and signals. The data center/headend 104 houses equipment, such as optical line terminals (OLTs), that convert electrical signals to optical signals and vice versa. From the data center/headend 104, optical signals are transmitted through a network of optical fiber or cables to reach the end users 103.

The optical fiber or cables, which may be bundled together in protective tubes or conduits, carry the optical signals over long distances with minimal loss and interference. These cables are strategically routed through the communication network 100 to ensure efficient and reliable data transmission. Along the way, the optical fiber or cable may pass through various network components and connection points, one of which may be the optical fiber distribution cabinet 102.

The optical fiber distribution cabinet 102 may serve as an intermediary point between the data center/headend 104 and the end users 103. It is typically located in the field, closer to the end users 103, and acts as a centralized hub for organizing, splitting, and distributing the optical fiber or cables. The optical fiber distribution cabinet 102 provides a secure and protected environment for the optical fiber or cable components, shielding them from external factors such as weather, dust, and physical damage. Inside the optical fiber distribution cabinet 102, the incoming optical fiber or cable, which may be housed within a tube, are carefully managed and organized. The cables are often split into smaller bundles or individual optical fibers, each for a specific group of end users or network branch. This splitting and organization process ensures that the optical fiber or cable signals are efficiently distributed to the intended recipients while maintaining signal integrity.

The optical fiber or cables may be installed in the communication network 100 using various methods, depending on factors such as distance, terrain, and available infrastructure. Two common methods for installing optical fiber or cables are pulling and blowing. Both methods typically involve the use of tubes, which are pre-installed pathways that provide a protective organized route for the optical fiber or cables. The tubes are often installed underground, either by trenching or directional drilling, or they may be attached to utility poles or other overhead structures. Once the tubes are in place, they serve as ready pathways for the optical fibers or cables to be installed using either the pulling or blowing methods.

The pulling method involves attaching the optical fiber or cable to a pre-installed pull tape or rope, which is then used to manually or mechanically draw the optical fiber or cable through a tube. This method is suitable for shorter distances and straight runs, as the pulling process can cause friction and stress on the optical fiber or cable, potentially leading to damage.

On the other hand, the blowing method, also known as jetting, uses compressed air to push the optical fiber or cable through the tube. A special machine is used to generate the high-pressure air flow, which floats the optical fiber or cable through the tube with minimal friction. Blowing optical fiber or cable is ideal for longer distances, as it reduces the risk of damage on the optical fiber or cable and allows for faster installation speeds. It is also suitable for tubes with bends or elevation changes, as the air flow helps guide the optical fiber or cable through these obstacles.

In the communication network 100, both pulling and blowing methods may be employed to install the optical fibers or cables, depending on the specific requirements of each segment. For example, pulling may be used for shorter runs between the optical fiber distribution cabinet 102 and nearby end users 103, while blowing may be used for longer runs between the data center/headend 104 and the optical fiber distribution cabinet 102.

It is important to note that the communication network 100 shown in FIG. 1 is a simplified representation, and actual networks may have more complex topologies and additional components, such as splitters, amplifiers, and network interface devices. However, the basic principles of distributing data and signals from the data center/headend 104 to the end users 103, with the optical fiber distribution cabinet 102 serving as a key connection point, remain the same.

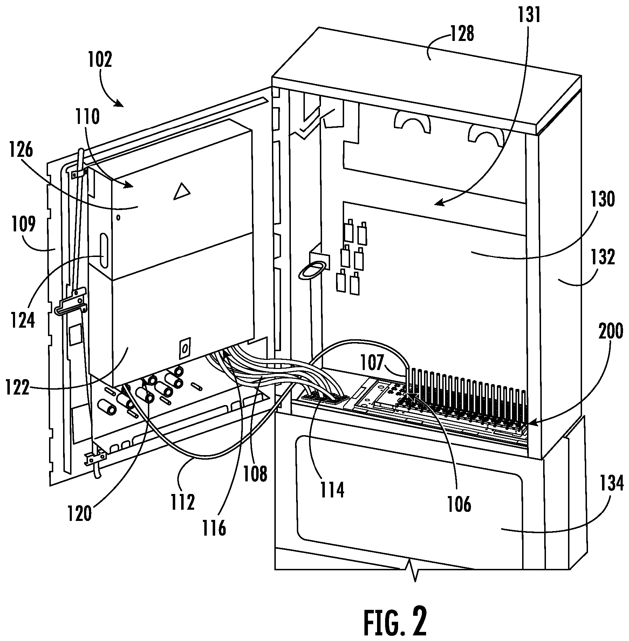

FIG. 2 illustrates the example optical fiber distribution cabinet 102 from the communication network 100 with its cabinet door 109 in an open position. The optical fiber distribution cabinet 102 is typically positioned in the field, such as in close proximity to the end users' 103 premises (businesses, homes, etc.), and serves as an intermediary point between the data center/headend 104 and the end users 103. The primary function of the optical fiber distribution cabinet 102 is to facilitate the organization, protection, and distribution of optical fibers or cables, ensuring reliable communication services for customers. The optical fiber distribution cabinet 102 is constructed to withstand a variety of environmental conditions, as it is commonly installed outdoors or in remote locations. The cabinet's design protects the communication network components and the cable, or the optical fiber housed within it from factors such as moisture, dust, and temperature fluctuations. In various embodiments, the optical fiber distribution cabinet 102 may be pole-mounted, pad-mounted, or installed in underground vaults, depending on the specific requirements of the deployment site and the network architecture. The size and configuration of the optical fiber distribution cabinet 102 may vary based on the number of end users it serves and the capacity of the network. Some cabinets may be compact, accommodating a smaller number of customers, while others may be larger, housing hundreds or even thousands of optical fibers or cables to meet the demands of more extensive networks. The modular design of the optical fiber distribution cabinet 102 enables scalability and flexibility, allowing network operators to easily expand or modify the cabinet as needed.

As illustrated, the example optical fiber distribution cabinet 102 features a top section 128, side portions 132, and a lower section 134. The top section 128 provides additional room for cable management and organization. This area can, for example, accommodate extra cable slack, splice enclosures, and/or passive components like splitters or couplers. The top section 128 helps maintain an organized appearance within the cabinet while offering flexibility for future network expansions or reconfigurations and also provides protection of the interior components. The cabinet 102 also features side portions 132 that may also protect the interior components and provide structural integrity. These side portions may be made of materials, such as steel or aluminum, to withstand environmental challenges and prevent unauthorized access. The side portions 132 also contribute to the overall rigidity and stability of the optical fiber distribution cabinet 102. The lower section 134 of the optical fiber distribution cabinet 102 offers convenient access to the tubes 106 and other components, such as the incoming distribution cable(s)/optical fiber(s) 108, such as for maintenance or installation. The tubes 106 may comprise of an outer wall 107 that surrounds an inner hollow opening, and are pre-installed and run underground from the optical fiber distribution cabinet 102 to the end users' premises, providing a protective conduit for the cable or optical fibers 112 that will be installed within them. This lower section 134 can be easily opened, allowing technicians to install, maintain, or troubleshoot the tubes 106 and/or other components contained therein. The lower section 134 may include features like cable glands, grommets, or sealing mechanisms to prevent moisture, dust, or pests from entering the cabinet.

Within the optical fiber distribution cabinet 102, there may be a back panel 130. This back panel 130 may serve as a mounting surface for various components, such as cable management hardware, equipment brackets, or grounding bars. The back panel 130 may be composed of durable material, capable of withstanding the weight and stress of the mounted components and may be designed to allow for easy customization and adaptation to different network requirements. Also featured within the optical fiber distribution cabinet 102 is a strain relief device 200 positioned at the bottom of an upper chamber 131 of the optical fiber distribution cabinet 102 to manage and secure a tube or multiple tubes 106 that enter the optical fiber distribution cabinet 102 from the ground. These tubes 106, as mentioned, may comprise of an outer wall 107 that surrounds an inner hollow opening, and are pre-installed and run underground from the optical fiber distribution cabinet 102 to the end users' premises, providing a protective conduit for the cable or optical fibers 112 that will be installed within them.

The strain relief device 200 ensures that the tubes 106 are properly organized and secured as they enter the cabinet 102, reducing the risk of damage or disruption to the cables or optical fibers 112 during installation and operation. The strain relief device 200 is capable of accommodating a variable number of tubes 106, depending on the specific requirements of the network and the optical fiber distribution cabinet 102. In conventional optical fiber distribution cabinets, technicians often need to individually fasten and secure each tube entering the cabinet, which can be time-consuming and labor-intensive process. The strain relief device 200 enables the technician to install and secure multiple tubes 106 in a single operation. In some embodiments, the strain relief device 200 may be configured to manage a single row of tubes 106, while in others, it may accommodate multiple rows or even a matrix of tubes. The arrangement of the tubes 106 within the strain relief device 200 can be optimized to maximize space utilization and minimize the potential for congestion or entanglement. The strain relief device 200 enables users to efficiently organize and install multiple tubes 106 simultaneously.

Positioned above the strain relief device 200, the cable/optical fiber management panel 110 is mounted on the inside of the optical fiber distribution cabinet door 109. This panel 110 may function as the main termination and connection point for the cables or optical fibers 112 that will be fed into the tubes 106. The cable/optical fiber management panel 110 offers an organized space for technicians to splice and connect the incoming optical fibers or cables from the distribution cable(s)/optical fiber(s) 108 that will be routed to specific end users.

The distribution cable(s)/optical fiber(s) 108, which carries the cable or optical fiber 112 from the data center/headend 104, enters the optical fiber distribution cabinet 102 through a dedicated cable port or opening 114. Inside the cabinet, the distribution cable(s)/optical fiber(s) 108 is managed and routed to the cable/optical fiber management panel 110 via an opening 116 at the bottom of the cable/optical fiber management panel 110. The cable/optical fiber management panel 110 includes a handle 124 allowing technicians to easily grasp, open, or close the cable/optical fiber management panel 110 during installation and maintenance activities. The cable/optical fiber management panel 110 may also be divided into two distinct sections as illustrated to include: a bottom portion 122 and a top portion 126. The bottom portion 122 may be dedicated to handling the distribution cable(s)/optical fiber(s) 108, providing space for splicing, organizing, and routing tasks. Technicians can access this area to perform initial cable preparation, such as stripping, cleaning, and fusion splicing. The bottom portion 122 may also include features like splice trays, cable guides, and strain relief mechanisms to ensure the proper handling and protection of the distribution cable(s)/optical fiber(s) 108.

On the other hand, the top portion 126 of the cable/optical fiber management panel 110 may focus on managing the individual cables or optical fibers 112 that will be connected to the end users 103. This portion may provide an organized environment for routing and terminating the cables or optical fibers 112. The top portion 126 may include features such as adapters, connector panels, and labeling provisions to facilitate easy identification and connectivity. An opening 120 located at the bottom of the optical fiber management panel 110, allows the terminated cables or optical fibers 112 to exit the panel 110 and deliver to their corresponding tubes 106.

Delivering the individual cable or optical fiber 112 to the end users 103 involves carefully matching the cable or optical fiber 112 to a corresponding residence location of the end user. As described in relation to FIG. 1, technicians use specialized blowing or pulling equipment to efficiently feed the cables or optical fibers 112 through the tubes 106, wherein the tubes 106 extend from the optical fiber distribution cabinet 102 to a residence of the end user 103 (a business or home) where the connection process is complete. Each cable or optical fiber 112 is carefully guided into its designated tube 106, ensuring a secure and organized path from the cabinet 102 to the customer. In some embodiments, the optical fiber distribution cabinet 102 may accommodate multiple distribution cable(s)/optical fiber(s) 108, each containing a large number of cables or optical fibers. These distribution cable(s)/optical fiber(s) 108 are used to transmit data and signals from the data center/headend 104 to the optical fiber distribution cabinet 102, where they are then split and distributed to individual end users through the tubes 106. The optical fiber management panel 110 provides a structured and organized environment for managing the splicing and connection of the cables or optical fibers that will be routed to end users.

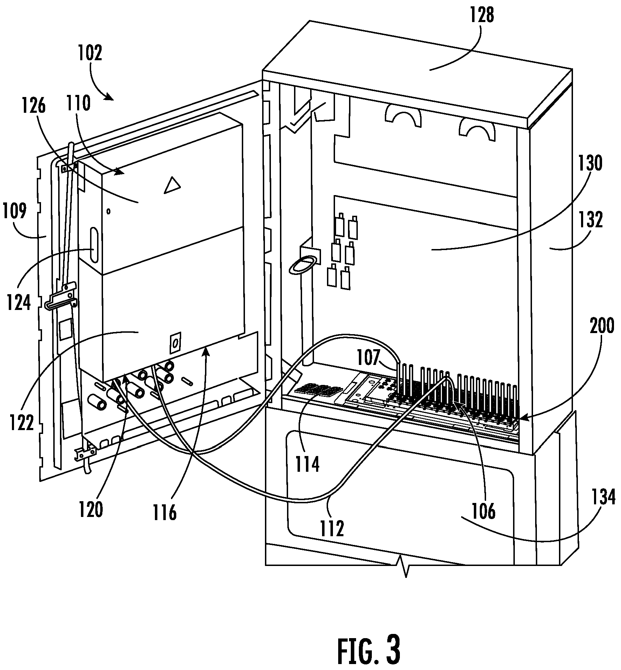

FIG. 3 shows the optical fiber distribution cabinet 102 as shown in FIG. 2 with greater detail and more examples illustrating the interaction between the tubes 106 and the cables or optical fibers 112. The strain relief device 200, as shown, allows for the tubes 106 to be bent at an angle, such as up and, in some embodiments, past 90 degrees, depending on the specific installation requirements. The bending capability of the tubes 106, facilitated by the strain relief device 200, is an advantage when it comes to the ease of installation, particularly in scenarios involving multiple tubes 106. In current configurations, where tubes are rigidly secured or lack the ability to bend, the process of inserting the cables or optical fibers 112 into the tubes 106 can be challenging and time-consuming, especially when dealing with a large number of tubes 106.

The ability to bend the tubes 106 allows for better access and visibility when inserting the cables or optical fibers 112. In a typical optical fiber distribution cabinet 102, there may be numerous tubes 106 arranged in close proximity to each other. When the tubes 106 are rigid and cannot be bent, making it difficult for technicians to accurately guide the cables or optical fibers 112 into the desired tube 106, particularly when working in tight spaces or with limited visibility. By allowing the tubes 106 to bend, the strain relief device 200 enables technicians to position the tubes 106 in a way that provides clear access to the tube openings, making it easier to feed the cables or optical fibers 112 into the correct tubes 106. Further, the ability to bend the tubes 106 significantly reduces the time and effort required for cable or optical fiber installation, particularly when dealing with a large number of tubes 106.

In a scenario where multiple cables or optical fibers 112 need to be installed across numerous tubes 106, the ability to bend the tubes 106 allows technicians to work efficiently. They can quickly and easily access each tube 106, insert the corresponding cable or optical fiber 112, and move on to the next tube 106 without the need for complex maneuvering or the risk of inadvertently inserting the cable or optical fiber 112 into the wrong tube 106. The bending capability of the tubes 106 allows for greater flexibility in the routing and organization of the tubes 106 within the optical fiber distribution cabinet 102. In some cases, the tubes 106 may need to be routed around obstacles or directed towards specific components within the cabinet 102. The ability to bend the tubes 106 at various angles enables technicians to create clean and organized cable or optical fiber management pathways, reducing clutter and improving the overall functionality of the optical fiber distribution cabinet 102.

In addition to the ease of installation, the bending capability of the tubes 106 also facilitates maintenance and troubleshooting activities. In the event that a cable or optical fiber 112 needs to be replaced or a tube 106 needs to be accessed for repair, the ability to bend the tubes 106 allows technicians to easily locate and manipulate the specific tube 106 and optical fiber 112 without disturbing the surrounding components.

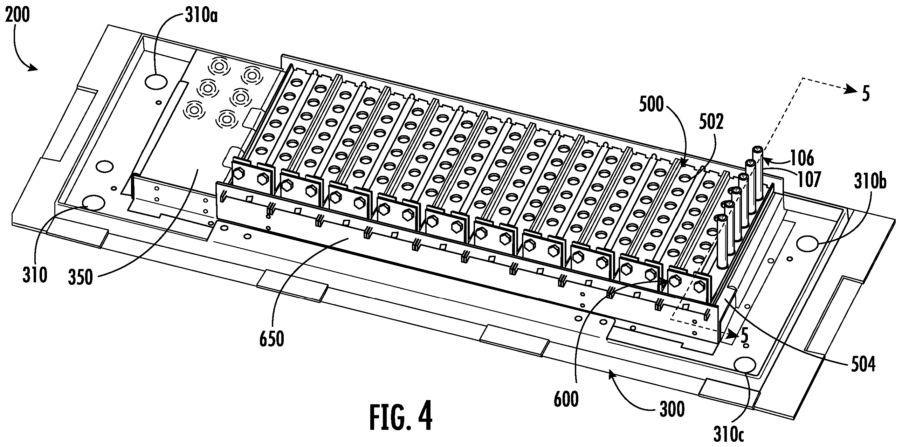

FIG. 4 provides a detailed view of an example embodiment of the strain relief device 200 as mentioned in FIGs. 1-2, showing more detail regarding securing and organizing the tubes 106 within the optical fiber distribution cabinet 102. The strain relief device 200 is designed to accommodate multiple tubes 106 that enter the cabinet from the ground, providing an efficient way of managing the tubes 106 and protecting the cables or optical fibers 112 contained within them.

As shown in FIGs. 4-6, the example embodiment of the strain relief device 200 comprises a first element 400 and a second element 500, which are responsible for securing the tubes 106. In the example embodiment, the first element 400 may be a U-shaped element, while in other embodiments, the first element may have a different shape or configuration. Similarly, the second element 500, in the example embodiment, may be a L-shaped element while in other embodiments may have a different shape or configuration. The specific shapes of the first element 400 and the second element 500 can be chosen based on factors such as space constraints, ease of manufacturing, and desired level of tube support. The strain relief device 200 further comprises a tensioning device 600 configured to transition the first element 400 or the second element 500 between an unlocked position 551 and a locked position 550 by adjusting the horizontal position of the first element 400 or the second element 500 relative to the other of the first element 400 or the second element 500.

Regardless of their specific shapes and configurations, the first element 400 includes a plurality of holes 402 that extend from its top surface 404 to its bottom surface 406. Similarly, the second element 500 includes a plurality of holes 502 that extend from its top surface 504 to its bottom surface 506. The holes 402 and 502 are sized to have a diameter larger than the outer diameter of the tubes 106, allowing the tubes 106 to pass through the strain relief device 200 in an organized manner.

In the example embodiment shown in FIGs. 4-5, the strain relief device 200 may also include a bottom plate 300, which is positioned below the first element 400. The bottom plate 300 serves as a foundation for the strain relief device 200, providing additional stability and support. The bottom plate 300 may feature four holes 310, 310a, 310b, and 310c, located at its corners. These holes 310-310c allow the bottom plate 300 to be securely mounted onto a surface within the optical fiber distribution cabinet 102, ensuring stability and preventing movement of the strain relief device 200. The holes 310, 310a, 310b, and 310c are sized to accommodate common attachment accessories such as fasteners, screws or bolts. The bottom plate 300 may also include a plurality of openings or holes that align with the holes 402 of the first element 400, allowing the tubes 106 to pass through the bottom plate 300 and into the strain relief device 200.

In the example embodiment, the strain relief device 200 may further incorporate a sealing foam 350, which may be disposed above the bottom plate 300 such that it is positioned between the bottom plate 300 and the first element 400. The sealing foam 350 provides a weather-resistant seal around the tubes 106, preventing the ingress of moisture, dust, or other contaminants. The compressible and resilient nature of the sealing foam 350 ensures a tight and effective seal, even when the tubes 106 are subjected to movement or vibrations.

In the example embodiment, the strain relief device 200 may also feature brackets 650 that may be utilized by the first element 400 and the second element 500 to be held in place. These brackets 650 provide a reliable means of securing the first element 400 and the second element 500 within the strain relief device 200, while also allowing for their controlled horizontal movement when in a locked position and unlocked position. The design of the brackets 650 may vary depending on the specific configuration of the strain relief device 200 and the optical fiber distribution cabinet 102. In some embodiments, the brackets 650 may include guiding features (e.g., tracks or channels) that allow for the smooth and controlled horizontal movement of the first element 400 and the second element 500. These guiding features ensure and prevent any binding or misalignment that could hinder the operation of the strain relief device 200.

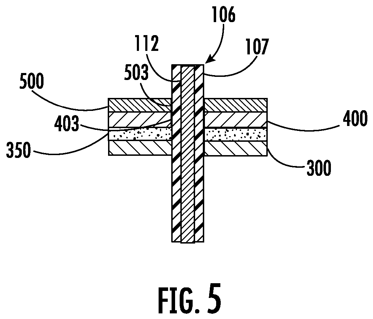

To better illustrate the internal arrangement and functionality of the strain relief device 200 as shown in FIG. 4, FIG. 5 offers a schematic cross-sectional side view of the strain relief device 200, illustrating how the tubes 106 pass through the openings or holes of the various elements. Referring to the schematic cross-sectional side view in FIG. 5, when the strain relief device 200 is in an unlocked position 551, the holes 402 of the first element 400 and the holes 502 of the second element 500 are aligned, allowing for the easy insertion or removal of the tubes 106 through the strain relief device 200. The tubes 106 pass through the aligned openings of the bottom plate 300, the holes 402 of the first element 400, and the holes 502 of the second element 500, ensuring an organized path for the tubes 106 within the optical fiber distribution cabinet 102.

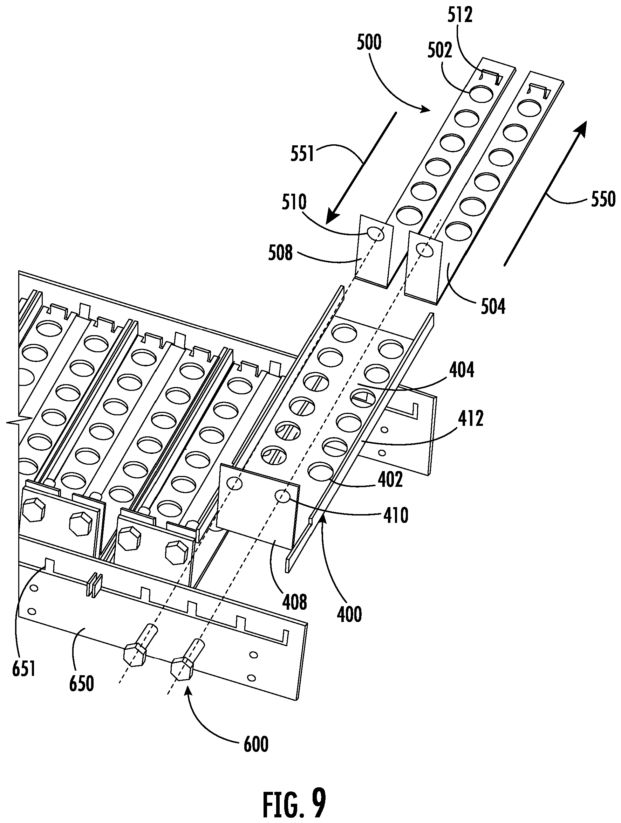

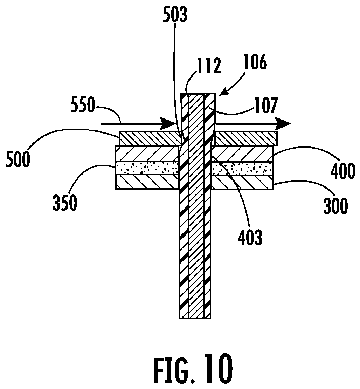

With brief reference to FIG. 9, to secure the tubes 106 in place, the tensioning device 600 is configured to transition the first element 400 or the second element 500 from the unlocked position 551 (shown in FIG. 5) to the locked position 550 (shown in FIG. 10) by adjusting their horizontal position relative to each other. In the locked position 500 (FIG. 10), the first element 400 or the second element 500 is displaced horizontally, causing the holes 402 and 502 to misalign. This misalignment causes an edge 403 of each of holes 402 of the first element 400 and an edge 503 of each of the plurality of holes 502 of the second element 500 to press into the outer wall 107 of each of the tubes 106 - causing a compressive force on the outer wall 107 of the tubes 106 by edge 403 and edge 503 (FIG. 10), effectively securing them within the strain relief device 200. The tensioning device 600 is designed to maintain the first element 400 or the second element 500 in the locked position 550 once the tubes 106 are secured. This ensures that the tubes 106 remain firmly held in place, preventing tube 106 from being pulled out or dislodged due to external forces or vibrations. The tensioning device 600 can be implemented using various mechanisms, such as screws, bolts, levers, cams, or spring-loaded devices, depending on the specific design requirements of the strain relief device 200.

The strain relief device 200 may be adapted to accommodate different numbers and configurations of tubes 106. In some embodiments, the first element 400 and the second element 500 may feature a single row of plurality of holes 402 and 502, respectively, allowing for a compact and space-efficient installation. In other embodiments, the strain relief device 200 may include multiple rows of plurality of holes and/or a matrix configuration, enabling the management of a larger number of tubes 106 within the same device. Furthermore, the strain relief device 200 may be manufactured in different sizes to accommodate various optical fiber distribution cabinet 102 dimensions and capacities. The modular design of the strain relief device 200 allows for easy scaling and customization to suit the specific requirements of different network deployments.

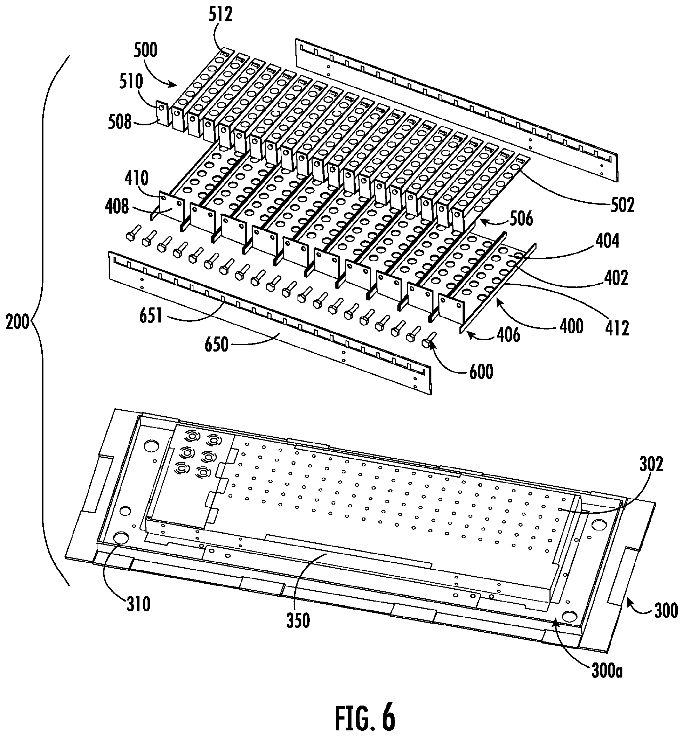

FIG. 6 provides an exploded view of the example embodiment of the strain relief device 200 clearly depicting each component and their arrangement. This view allows for a better understanding of how the individual components work together to secure and organize the tubes 106 within the optical fiber distribution cabinet 102.

As mentioned earlier, the base of the strain relief device 200 may contain the bottom plate 300. The bottom plate 300 serves as a foundation for the entire device, providing stability and support for the other components and may feature holes 310, 310a, 310b, and 310c enabling the bottom plate 300 to be securely mounted onto a surface within the optical fiber distribution cabinet 102. It is typically made from a rigid material, such as metal or high-strength plastic, to ensure durability and long-term reliability. The bottom plate 300 includes a plurality of openings or holes that align with the plurality of holes 402 of the first element 400, allowing the tubes 106 to pass through seamlessly.

In the example embodiment, a sealing foam 350 may be disposed on the top surface 300a of the bottom plate 300. The sealing foam 350 is a compressible and resilient material that provides a weather-resistant seal around the tubes 106. It prevents the ingress of moisture, dust, and other contaminants, protecting the optical fibers 112 within the tubes 106. The sealing foam 350 is designed to conform to the shape of the tubes 106 and fill any gaps between the tubes 106 and the surrounding components, ensuring a tight and effective seal. Positioned above the sealing foam 350 is the first element 400. As mentioned earlier, the first element 400 may be a U-shaped element that features a base plate 408 at one end of the first element 400 comprising of at least one opening 410. This opening 410 may align with corresponding openings 510 of the second element 500, where the alignment of openings 410, 510 would allow the tensioning device 600 to be configured through the aligned openings to secure the first element 400 and second element 500. The first element 400 may further feature a rail 412 on its sides, between which the plurality of holes 402 are positioned, where, for example, two of the rails 412 provide guidance and additional support to the first element 400. The plurality of holes 402 of the first element 400 extend from the top surface 404 of the first element 400 to its bottom surface 406. These holes 402 are sized to accommodate the outer diameter of the tubes 106, wherein the of holes 402 has a diameter larger than the outer diameter of the tubes 106. The first element may also be composed of a rigid material or other suitable material depending on the specific design requirements.

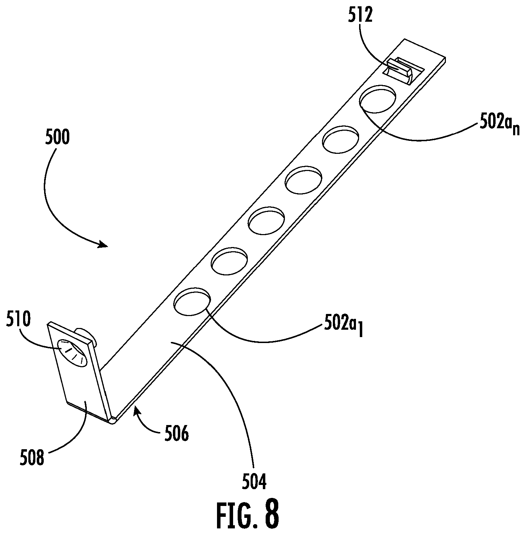

The second element 500 is positioned above and sits on the top surface 404 of the first element 400 creating a stacked configuration. The second element 500 may be a L-shaped element that features a base plate 508 at one end of the second element 500 comprising of at least one opening 510. This opening 510 may align with the corresponding openings 410 of the first element 400, where the alignment would allow the tensioning device 600 to be configured through the aligned openings to secure the first element and second element. Further, the second element 500 may contain a latch-like feature 512 (shown also in FIG. 8) that sits on opposite end from the base plate 508 that may serve as a stop feature when the second element is displaced horizontally. As the second element 500 moves, the latch-like feature 512 comes into contact with the wall of a bracket 650 or other similar attachment components containing a surface or wall, preventing further movement and ensuring that the second element 500 remains within its intended range of motion. The second element 500 includes a plurality of holes 502 that extend from its top surface 504 to its bottom surface 506. The plurality of holes 502 align with the plurality of holes 402 of the first element 400 when the strain relief device 200 is in an unlocked position, allowing for the easy insertion or removal of the tubes 106. The second element 500 may also be composed of a rigid material or other suitable material depending on its specific design requirements.

The tensioning device 600 may be another component of the strain relief device 200. The tensioning device 600 may apply a force to the second element 500 to cause the second element 500 to stay in the locked position. As mentioned, in some embodiments, the tensioning device 600 may be responsible for transitioning the first element 400 or the second element 500 from an unlocked position to a locked position. The tensioning device 600 can be implemented using various mechanisms, such as screws, bolts, levers, cams, or spring-loaded devices. In the example embodiment shown in FIG. 6, the tensioning device 600 is a screw-based mechanism.

The strain relief device 200 may also include additional components as mentioned such as brackets 650 that provide support in holding the first element 400 and second element 500 in place. The bracket 650 may also feature an opening 651 that may accommodate the rails 412 of the first element 400 to be placed in the opening 651 of the bracket 650 to further secure the first element 400 and ensure that the first element 400 maintains its proper position and alignment, even under the stress of vibrations or other external forces. In some embodiments, the strain relief device 200 may include components such as fasteners, to ensure proper alignment and secure attachment of the various elements. These components work together to create a cohesive and reliable assembly of the strain relief device 200 that effectively manages and protects the tubes 106 and the cables or optical fibers 112 within them.

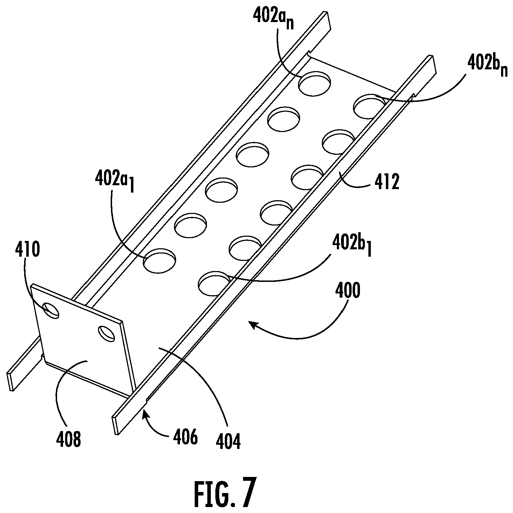

Moving on from the exploded view of the strain relief device 200, FIG. 7 and FIG. 8 provide a detailed look at the first element 400 and the second element 500 of the example embodiment of the strain relief device 200, respectively. These two components help in securing and organizing the tubes 106 within the strain relief device 200, as discussed in the previous sections.

FIG. 7 illustrates the first element 400, which is positioned below the second element 500 in the stacked configuration of the strain relief device 200. The first element 400 features a top surface 404 and a bottom surface 406, with a plurality of holes 402 extending from the top surface 404 to the bottom surface 406. These holes 402 are sized to accommodate the outer diameter of the tubes 106, allowing them to pass through the holes 402. The first element 400 may feature multiple rows of holes 402 where the first element 400 may contain a first row of holes designated as 402a₁ through 402aₙ where "n" represents the total number of holes in the row. For example, if the first row contains eight holes, they would be labeled as 402a₁, 402a₂, 402a₃ and so on, up to 402a₈. The value of "n" can be any positive integer, allowing for flexibility in the design and adaptation of the first element 400 to accommodate different number of tubes 106. The first element 400 may also contain a second row of holes 402b₁ through 402bₙ following the same naming convention as the first row. The number of holes in the second row may be the same as or different from the number of holes in the first row, depending on the specific requirements of the application.

Further, the first element 400 may feature a base plate 408 at one end of the first element 400 comprising at least one opening 410 as mentioned in FIG. 6. The opening 410 is positioned and sized to align with a corresponding opening of the second element 510, allowing the tensioning device 600 to be configured to secure the first element and second element together. The opening 410 may be circular, oval, or any other shape that is conducive to the specific securing method employed. In some cases, multiple openings 410 may be present to provide additional points of attachment and ensure a more secure attachment between the first element 400 and the second element 500. The first element may also feature rails 412 on either side of the rows of holes. These rails 412 may be designed to engage with corresponding openings 651 of the bracket 650 as shown in FIG. 6. In other example embodiments, these rails 412 may engage with slots or channels or openings of other components that aid in the secure attachment and alignment of the first element. The length of the rails 412 may be chosen to allow for the necessary range of horizontal movement of the first element 400 where the surfaces of the rails 412 may be finished or treated to reduce friction and ensure smooth operation over repeated cycles of transiting between the locked position and unlocked position.

The shape and configuration of the first element 400 may vary depending on the specific design requirements of the strain relief device 200. In the example embodiment, the first element 400 may be a U-shaped element. This U-shaped design may allow for efficient space utilization within the optical fiber distribution cabinet 102 while providing adequate support and stability for the tubes 106. In other embodiments, the first element 400 may have a different shape, depending on the available space within the optical fiber distribution cabinet 102 and the desired level of tube support, alternative shapes may include those that complements the contours of the tubes. Regardless of its shape, the primary function of the first element 400 remains the same, to accommodate and secure the tubes 106 in conjunction with the second element 500.

FIG. 8 focuses on the second element 500, which is positioned above the first element 400 in the strain relief device 200 such that the bottom surface of the second element 506 sits on the top surface of the first element 404. Similar to the first element 400, the second element 500 includes a top surface 504, a bottom surface 506, and a plurality of holes 502 extending from the top surface 504 to the bottom surface 506. The holes 502 of the second element 500 align with the holes 402 of the first element 400 when the strain relief device 200 is in an unlocked position, allowing for the easy insertion or removal of the tubes 106. Similar to the first element 400, the second element may contain at least one row of holes where a first row of holes is designated as 502a₁ through 502aₙ where "n" represents the total number of holes in the row. This row of holes (502a₁ through 502aₙ) aligns with the first row of holes 402a₁ through 402aₙ of the first element 400. For example, if the first row of holes of the first element 400 contains eight holes 402a₁ through 402a₈, then a second element 500 containing a row of eight holes would be positioned above the top surface of the first element 404 where the row of holes of the second element 500 would be labeled as 502a₁, 502a₂, 502a₃ and so on, up to 502a₈. The value of "n" can be any positive integer, allowing for flexibility in the design and adaptation of the strain relief device 200 to accommodate different number of tubes 106.

Further, the second element 500 may feature a base plate 508 at one end of the second element 500 comprising at least one opening 510 as mentioned in FIG. 6. The opening 510 is positioned and sized to align with a corresponding opening of the first element 410, allowing the tensioning device 600 to be configured to secure the first element and second element together. The opening 510 may be circular, oval, or any other shape that is conducive to the specific securing method employed.

In the example embodiment, the second element 500 may also contain a latch 512 that may serve as a stop feature that limits the horizontal movement of the second element 500. The latch 512 may be positioned on one end of the second element 500, opposite of the base plate 508 where it serves to prevent the second element 500 from being over-extended or completely disengaged from, for example, the bracket 650, during the locking and unlocking process. The latch 512 may be a simple protrusion or tab that extends outward from the end of the second element 500. This protrusion is designed to come into contact with a corresponding surface or edge within the strain relief device 200 such as the bracket 650 when the second element 500 reaches the end of its intended range of horizontal movement. The contact between the latch 512 and corresponding surface or edge stops the second element 500 from moving further, ensuring that it remains securely engaged with the first element 400.

In some embodiments, the latch 512 may include a sloped or angled surface that guides latch 512 into proper alignment with the corresponding surface of the bracket 650 as the second element 500 is moved horizontally. This angled surface can help to prevent binding or misalignment, ensuring a smooth and consistent stopping action.

In some embodiments, the latch 512 may incorporate a spring-loaded mechanism or a resilient material that allows for a small amount of compression or deflection when it comes into contact with a corresponding surface or edge. This compliance can help to absorb any shock or vibration that may occur during the stopping action.

In some embodiments, the latch 512 may be adjustable or replaceable, allowing for fine-tuning of the stopping position or compensation for wear over time. This adjustability can be achieved through the use of set screws, shims, or other mechanical means, enabling technicians to maintain the proper functioning of the latch 512 throughout the life of the strain relief device 200.

Similar to the first element 400, in some embodiments, the second element 500 may have various shapes and configurations to suit different strain relief device 200 designs. Alternative shapes for the second element 500 may include those that complements the contours of the tubes 106. The choice of shape for the second element 500 may also depend on factors such as the desired level of tube compression, the ease of manufacturing, and the compatibility with the first element 400.

The arrangement of the holes 402 and 502 on the first element 400 and the second element 500, respectively, can also vary based on the number and layout of the tubes 106 within the strain relief device 200. In some embodiments, the holes 402 and 502 may be arranged in a single row, allowing for a compact and space-efficient design. In other embodiments, the holes 402 and 502 may be arranged in multiple rows and/or a matrix configuration to accommodate a larger number of tubes 106, wherein the matrix configuration, the holes 402 and 502 are arranged in a grid-like pattern, with multiple rows and columns of holes spanning the surfaces of the first element 400 and the second element 500. This arrangement is beneficial for larger optical fiber distribution cabinets 102 or networks that require the management of numerous tubes 106 where each row and column of holes 402 and 502 corresponds to a specific tube 106 or group of tubes 106. The spacing between the holes 402 and 502 in each of the rows and columns can be optimized based on the diameter of the tubes 106 and the desired level of separation between the tubes 106. By maintaining a consistent and organized layout, the matrix configuration helps to prevent tangling, crossing, or interference between the tubes 106, ensuring a neat and manageable cable arrangement within the strain relief device 200. The multiple-row and/or matrix configuration enables for the organized and secure routing of the tubes 106 through the strain relief device 200, preventing tangling or damage to the optical fibers 112 within the tubes 106. The multiple-row and/or matrix configuration also enables for easy identification and tracking of individual tubes 106. In some embodiments, each hole 402 and 502 within the matrix can be assigned a specific designation or labeling scheme, such as alphanumeric codes or color-coding. This labeling system enables technicians to quickly locate and identify specific tubes 106 during installation, maintenance, or troubleshooting procedures, saving time and reducing the risk of errors.

Furthermore, the size and shape of the holes 402 and 502 can be optimized based on the specific dimensions and characteristics of the tubes 106 being used. While the holes 402 and 502 are generally sized to be slightly larger than the outer diameter of the tubes 106, the exact dimensions may vary depending on factors such as the wall thickness of the tubes 106, the material composition of the tubes 106, and the desired level of compression when the strain relief device 200 is in a locked position.

In some embodiments, the shape of the holes 402 and 502 may be selected based on factors such as the cross-sectional shape of the tubes 106, the desired level of securing force, and the ease of manufacturing. In some embodiments, oval-shaped holes may be used to accommodate tubes 106 with a slightly flattened or elliptical cross-section. The oval shape of the holes can provide a more conforming fit to the tube's cross-section, potentially increasing the contact area between the edges of the holes and the outer wall 107 of the tubes 106. This increased contact area may result in a more evenly distributed compressive force, reducing the risk of localized stress points on the tubes 106. Regardless of the shape of the holes 402 and 502, the holes 402 and 502 should be slightly larger than the outer diameter or cross-sectional dimensions of the tubes 106 to allow for easy insertion and removal of the tubes when the strain relief device 200 is in the unlocked position. However, the holes 402 and 502 should not be excessively large compared to the outer diameter of tubes, as this may reduce the effectiveness of the compressive force applied by the edges of the holes when the strain relief device 200 is in the locked position.

In addition, the surfaces of the first element 400 and the second element 500 may be engineered to provide specific functional properties. For instance, the surfaces that come into contact with the tubes 106, particularly the edges 403 and 503 of the holes 402 and 502, may be designed with a textured or ribbed pattern. This textured surface can help to increase the grip on the tubes 106 when the strain relief device 200 is in a locked position, reducing the likelihood of slippage or movement.

It is worth noting that the modular nature of the strain relief device 200 allows for the first element 400 and the second element 500 to be easily replaced or interchanged if necessary. This modularity is particularly beneficial in scenarios where the strain relief device 200 needs to accommodate different tube sizes or configurations over time. By designing the first element 400 and the second element 500 as separate, detachable components, the strain relief device 200 can be quickly adapted to changing network requirements without the need for complete replacement.

FIG. 9 provides a detailed view of the example embodiment of the strain relief device 200, focusing on the horizontal movement of the first element 400 or the second element 500 relative to each other. This movement allows the transitioning of the strain relief device 200 between the unlocked position 551 and the locked position 550, allowing for the secure retention of the tubes 106 within the device.

As previously discussed, the strain relief device 200 comprises a first element 400 and a second element 500, each containing a plurality of holes 402 and 502, respectively. These holes 402 and 502 are sized to accommodate the outer diameter of the tubes 106, enabling the tubes to pass through the strain relief device 200 in an organized manner. In the unlocked position 551, the holes 402 of the first element 400 and the holes 502 of the second element 500 are aligned, creating an opening allowing for the insertion or removal of the tubes 106. To transition the strain relief device 200 from the unlocked position 551 to the locked position 550, either the first element 400 or the second element 500 horizontally is displaced relative to the other element. This horizontal displacement causes the holes 402 and 502 to misalign, effectively reducing the diameter of the resulting passageway for the tubes 106. As a result, edges 403, 503 of the holes 402, 502 would press into the outer walls 107 of each of the tubes 106 applying a compressive force on the outer wall 107 of each of the tubes 106 that are positioned within the holes. As mentioned earlier, the first element 400 may feature a base plate 408 on one end of the first element 400 comprising of at least one opening 410. This opening 410 may align with corresponding openings 510 of the second element 500, where the alignment would allow the tensioning device 600 to be configured through the aligned openings to secure the first element 400 and second element 500.

The first element 400 may further feature a rail 412 on its sides between which the plurality of holes 402 are positioned. These rails 412 may provide guidance and support to the first element 400 and may be placed and fit into a corresponding opening 651 of the bracket 650 to further secure the first element 400 and ensure the element maintains its proper position and alignment. Similarly, the second element 500 may also feature a base plate 508 on one end of the second element 500 comprising of at least one opening 510. This opening 510 aligns with corresponding openings 410 of the first element 400, where the alignment would allow the tensioning device 600 to engage through the aligned openings to secure the first element 400 and second element 500 into a locked position 550, or the tensioning device 600 to disengage through the aligned openings to transition the first element 400 and second element 500 to an unlocked position 551. Further, on an opposite end from the base plate 508 is the latch-like feature 512 that may serve as a stop feature when the second element is displaced horizontally. As the second element 500 moves, the latch-like feature comes into contact with the wall of the bracket 650, preventing further movement and ensuring that the second element 500 remain within its intended range of motion.

In one embodiment, the first element 400 may remain stationary while the second element 500 is displaced horizontally relative to the first element 400. As the second element 500 moves, the holes 502 begin to overlap with the holes 402 in the first element 400. This overlapping action allows the edges 503 of the holes 502 to press into each of the outer wall 107 of tubes 106 resulting in a compressive force on each of the outer wall 107 of the tubes 106 that are positioned within the holes. The compressive force increases as the second element 500 is further displaced, ultimately reaching a point where the tubes 106 are secured and held in place by the strain relief device 200.

In another embodiment, the second element 500 remains stationary while the first element 400 is displaced horizontally relative to the second element 500. The horizontal movement of the first element 400 causes the holes 402 to misalign with the holes 502 in the second element 500, applying a compressive force on the tubes 106 in a similar manner as described above.

In some embodiments, the strain relief device 200 may also be designed to accommodate multiple rows or arrays of tubes 106 or may be in a matrix configuration wherein the holes 402 and 502 are arranged in a grid-like pattern, with multiple rows and columns of holes spanning the surfaces of the first element 400 and the second element 500. In such embodiments, the first element 400 and the second element 500 may include corresponding rows or arrays of holes 402 and 502. The horizontal displacement of the first element 400 or the second element 500 would result in the misalignment of the holes across all rows or arrays. Accordingly, edges of the holes press into the outer walls 107 of each of the tubes 106 applying a compressive force on the outer wall 107 of each of the tubes 106 that are positioned within the holes, allowing for the simultaneous securing of multiple tubes 106.

The first element 400 and the second element 500 work together to secure the tubes 106 when the strain relief device 200 is in the locked position 550. In some embodiments, the edges 403, 503 of the holes 402 and 502 themselves may also be designed with additional features to enhance the securing and organization of the tubes 106. The edges 403 and 503 may be chamfered or rounded to prevent any sharp edges from damaging the tubes 106 during installation or removal. The chamfered or rounded edges also facilitate the smooth insertion and guidance of the tubes 106 through the strain relief device 200.Once the desired locked position 550 is achieved, the tensioning device 600 is engaged to secure the first element 400 and the second element 500 in this locked position. The tensioning device 600 is configured to transition the first element or the second element between the unlocked position 551 and the locked position 550 by adjusting the horizontal position of the first element or the second element relative to the other of the first element or the second element. It is also configured to maintain the first element 400 or the second element 500 in the locked position as a result maintaining the compressive force on each of the tubes 106, preventing their movement in response to external forces.

The tensioning device 600 may be accessible from the front of the optical fiber distribution cabinet 102, allowing for easy operation by the user. In one embodiment, the tensioning device 600 may include a screw or bolt mechanism located on the front side of the strain relief device 200. The tensioning device 600 is engaged with the first element 400 and the second element 500 by tightening the screw or bolt, which applies a controlled force to keep the first element 400 and the second element 500 in the locked position 550. The screw or bolt mechanism allows for precise adjustment of the compressive force, ensuring optimal retention of the tubes 106.

In another embodiment, the tensioning device 600 may utilize a lever or cam mechanism accessible from the front of the strain relief device 200. The tensioning device 600 engages with the first element 400 and the second element 500 by rotating or pivoting the lever or cam to a designated locking position, which securely holds the first element 400 and the second element 500 in the locked position. The lever or cam mechanism provides a quick and intuitive way to engage and disengage the locking function of the strain relief device 200.

Further, when the strain relief device 200 is in the locked position 550, and the tensioning device 600 is engaged to the first element 400 and the second element 500, a portion of each of the tubes 106 extending above the top surface of the second element 500 is able to bend or curve. This bending or curving feature allows for the insertion of cables or optical fibers 112 into the inner hollow opening of the tubes 106 as mentioned in earlier sections. The ability to bend or curve the tubes 106 facilitates efficient cable or optical fiber management and routing within the optical fiber distribution cabinet 102.

To release the tubes 106 from the strain relief device 200 or to adjust their position, the tensioning device 600 is disengaged from the first element 400 and the second element 500. This action reduces the compressive force on the tubes 106, allowing the first element 400 or the second element 500 to be displaced horizontally relative to the other element, transitioning the strain relief device 200 from the locked position 550 to the unlocked position 551. In the unlocked position 551, the holes 402 and 502 are realigned, enabling the removal, adjustment, or reinsertion of the tubes 106. When the strain relief device 200 is in the unlocked position 551, the tubes 106 may be inserted or removed through the aligned holes 402 and 502. The tubes 106 are guided into the strain relief device 200 from the bottom, passing through the holes until they extend above the top surface of the second element 500. The first element 400 or the second element 500 may then slide horizontally to transition the strain relief device 200 into the locked position 550, securing the tubes 106 in place.

The strain relief device 200 may accommodate a range of tube sizes and materials, ensuring versatility and adaptability in various network installations. When the strain relief device 200 is in the locked position 550, the compressive force applied by the edges 403, 503 of the misaligned holes 402 and 502 on each of the outer walls 107 of the tubes 106 provides secure retention while minimizing the risk of damage to the tubes 106. The holes 402 and 502 are sized to allow for a certain degree of tolerance in the outer diameter of the tubes 106, enabling the strain relief device 200 to effectively secure the tubes 106 that may have slight variations in size due to manufacturing tolerances or material properties. This tolerance ensures that the strain relief device 200 can securely retain the tubes 106 without applying excessive pressure that could potentially deform or damage the tubes 106, which could lead to damage of the cables or optical fibers 112 contained within. The amount of tolerance built into the strain relief device 200 may be determined based on factors such as the expected range of tube sizes, the material properties of the tubes 106, and the desired level of retention force. By incorporating this tolerance, the strain relief device 200 provides a reliable solution for securing and protecting the tubes 106 and the cables or optical fibers 112 they contain, even in demanding environmental conditions or when subjected to external forces.

FIG. 10 provides a schematic cross-sectional side view of the strain relief device 200, illustrating the interaction between the tubes 106 and the holes 402 and 502 of the first element 400 and the second element 500, respectively, when the strain relief device 200 is in the locked position 550. This view offers a detailed look at how the edges 403, 503 of the holes 402 and 502 engage with the outer wall 107 of the tubes 106 to secure them in place. More specifically, FIG. 10 illustrates an example embodiment where the first element 400 remains stationary while the second element 500 is displaced horizontally relative to the first element 400.

When the strain relief device 200 is transitioned from the unlocked position 551 to the locked position 550, the second element 500 is displaced horizontally relative to the first element 400. This horizontal movement causes the holes 402 and 502 to misalign, effectively reducing the diameter of the resulting passageway for the tubes 106. As a result, the edges 503 of the holes 502 come into contact with the outer wall 107 of the tubes 106, applying a compressive force that holds the tubes 106 in place.

In the locked position 550, the edges 503 of each of the plurality of holes 502 of the second element 500 press into the outer wall 107 of each of the of tubes 106. This pressing action causes the edges 503 of the holes 502 to "cut into" or deform the outer wall 107 of the tubes 106, creating a secure and stable retention of the tubes 106 within the strain relief device 200. The term "cut into" in this context does not necessarily imply a deep or destructive cutting action, but rather a slight deformation or indentation of the outer wall 107 of the tubes 106 caused by the pressure exerted by the edges 503 of the holes 502. This deformation enhances the ability to grip and secure the tubes 106, preventing them from slipping or moving within the strain relief device 200, even when subjected to external forces or vibrations. As mentioned earlier, an example embodiment may have the second element 500 remain stationary while the first element 400 is displaced horizontally relative to the second element 500 to a locked position 550, where the edges of the first element 403 perform in a similar manner as discussed above in securing the tubes 106 by "cutting into" the outer wall 107 of the tubes 106.

The extent to which the edges 403, 503 of the holes 402 and 502 "cut into" or deform the outer wall 107 of the tubes 106 depends on several factors, such as the material properties of the tubes 106, the sharpness of the edges 403, 503 of the holes 402 and 502, and the amount of compressive force applied by the first element 400 or the second element 500 in the locked position 550. The strain relief device 200 is designed to balance between providing a secure grip on the tubes 106 and minimizing any potential damage to the tubes 106 or the cables or optical fibers 112 contained within.

In some embodiments, the edges 403, 503 of the holes 402 and 502 may be specifically designed or shaped to enhance the gripping action on the tubes 106. For example, the edges may be sharpened or beveled to create a more concentrated pressure point on the outer wall 107 of the tubes 106, increasing the effectiveness of the "cutting into" action. Alternatively, the edges may be textured or serrated to improve the frictional grip on the tubes 106, reducing the likelihood of slippage or movement.

In other embodiments, the edges 403, 503 of the holes 402 and 502 may be lined with a resilient or compressible material, such as rubber or an elastomer, to provide a more distributed and gentle gripping action on the tubes 106. This lining material can help to evenly distribute the compressive force across the outer wall 107 of the tubes 106, reducing the risk of excessive deformation or damage while still providing a secure retention.

The "cut into" action of the edges of the holes 402 and 502 on the outer wall 107 of the tubes 106 ensures that each of the multiple tubes 106 is securely held in a fixed position within the strain relief device 200. This secure retention prevents the tubes 106 from being pulled out, twisted, or otherwise displaced, even when the cables or optical fibers 112 within the tubes 106 are subjected to tensile forces or other mechanical stresses. By securely holding the tubes 106 in a fixed position, the strain relief device 200 helps to maintain the integrity and reliability of the connections within the optical fiber distribution cabinet 102. The secure retention provided by the "cut into" action of the edges 403, 503 of the holes 402 and 502 ensures that the tubes 106 and the cables or optical fibers 112 contained within them are protected from damage, disturbance, or disconnection, even in demanding environmental conditions or during routine maintenance activities.

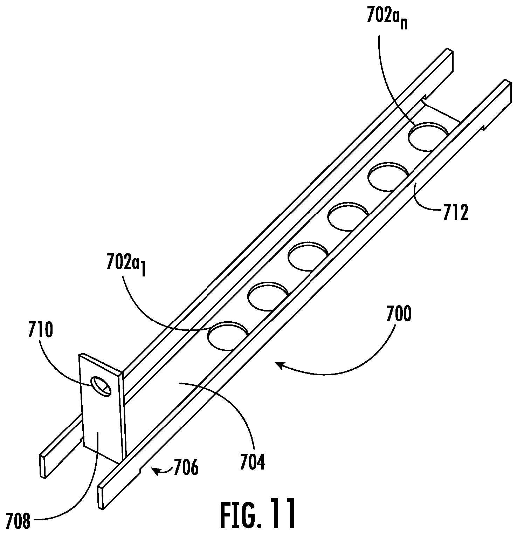

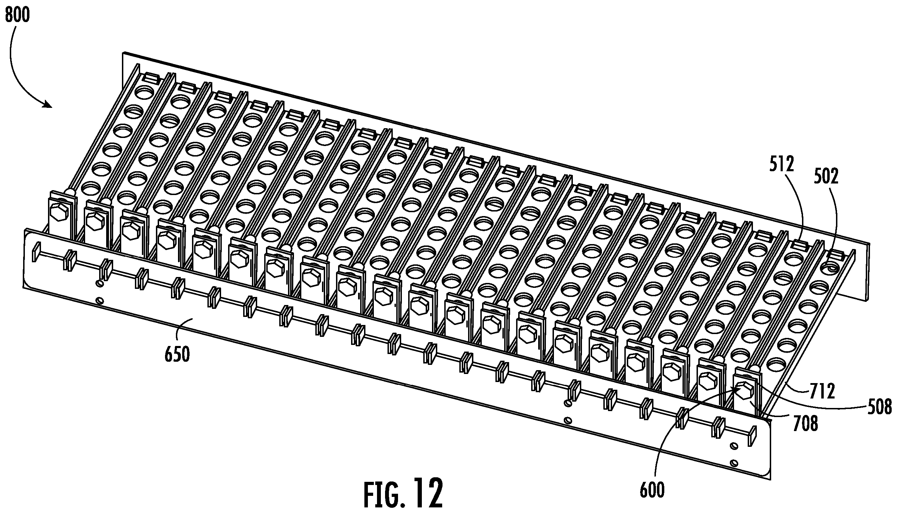

FIG. 11 and FIG. 12 introduce an alternative embodiment of the strain relief device, introducing a variation in the design of the first element. This embodiment offers a different configuration for managing and securing the tubes 106 within the optical fiber distribution cabinet 102, providing adaptability to suit specific installation requirements or space constraints.

FIG. 11 depicts a modified version of the first element, referred to as a U-part element 700. The U-part element 700 shares many of the features and characteristics of the first element 400 described in previous sections but presents a different arrangement of the holes 702. In this embodiment, the U-part element 700 includes a single row of holes, as opposed to the multiple rows or matrix configuration discussed earlier. The single row of holes is designated as 702a₁ through 702aₙ where "n" represents the total number of holes in the row. For example, if the row contains eight holes, they would be labeled as 702a₁, 702a₂, 702a₃ and so on, up to 702a₈. The value of "n" can be any positive integer, allowing for flexibility in the design of the U-part element to accommodate different number of tubes 106. The U-part element 700 maintains the functionality of the first element 400, serving as a lower component in the strain relief assembly. It features a top surface 704 and a bottom surface 706 with the holes 702a₁ through 702aₙ extending from the top surface 704 to the bottom surface 706. The holes 702a₁ through 702aₙ are sized and shaped to accommodate the outer diameter of the tubes 106, allowing them to pass through the U-part element 700 easily.

The single row arrangement of the holes 702a₁ through 702aₙ in the U-part element 700 offers a more compact design compared to the multiple rows or matrix configuration of the first element 400. This arrangement is particularly advantageous in situations where space is limited within the optical fiber distribution cabinet 102, or when a smaller number of tubes 106 need to be managed and secured. Further, the U-part element 700 features a base plate 708 at one end of the U-part element comprising at least one opening 710. The opening 710 is positioned and sized to align with a corresponding opening of the second element 510, allowing the tensioning device 600 to be secured the U-part element and second element together. The opening 710 may be circular, oval, or any other shape that is conducive to the specific securing method employed. The U-part element 700 also features rails 712 on either side of the row of holes. These rails 712 may be designed to engage with corresponding slots or channels or openings of components that aid in the secure attachment and alignment of the first element. The length of the rails 712 may be chosen to allow for the necessary range of horizontal movement of the U-part element 700 where the surfaces of the rails 712 may be finished or treated to reduce friction and ensure smooth operation over repeated cycles of transiting between the locked position and unlocked position.

FIG. 12 illustrates the integration of the U-part element 700 in a strain relief device 800. The strain relief device 800 incorporates the U-part element 700 as the lower component, along with a second element 500 positioned above the U-part element 700 such that the bottom surface 506 of the second elements sits on the top surface of the U-part element 704. The second element 500 in this embodiment is similar to the one described in previous sections, featuring a latch 512 and a plurality of holes 502 that align with the plurality holes 702 of the U-part element 700 when in the unlocked position 550 allowing the insertion of a tube 106 or multiples tubes 106 therethrough. In the locked position 551, edges of the holes 702 of the U-part element 700 and the edges 503 of the holes 502 of the second element 500 press into the outer wall 107 of the tubes 106, applying a compressive force creating a secure hold and preventing movement or slippage of the tubes 106. The edges 703, 503 of the holes 702 and 502 may "cut into" or deform the outer wall 107 of the tubes 106, enhancing the retention and stability of the tubes 106 within the strain relief device 800.

In addition to the U-part element 700 and the second element 500, the strain relief device 800 also includes a tensioning device 600, similar to the one described in the context of the strain relief device 200. The tensioning device 600 plays a similar role in the operation and functionality of the strain relief device 800, ensuring that the tubes 106 are securely retained and protected within the optical fiber distribution cabinet 102. As mentioned in the discussion of FIG. 9, the tensioning device 600 may also be responsible for transitioning the strain relief device 800 between the unlocked position 551 and the locked position 550 by adjusting the horizontal position of the U-part element 700 or the second element 500 relative to each other. When the strain relief device 800 is in the unlocked position, the plurality of holes 702 of the U-part element 700 and the plurality of holes 502 of the second element 500 are aligned, allowing for the easy insertion or removal of the tubes 106. To secure the tubes 106 in place, the tensioning device 600 is operated to maintain the strain relief device 800 into the locked position. In the locked position, the U-part element 700 or the second element 500 is displaced horizontally relative to the other, causing the holes 702 and 502 to misalign. As a result, the edges of the holes 702 and 502 press into the outer wall 107 of the tubes 106 applying a compressive force that holds the tubes 106 in place effectively securing them within the strain relief device 800. This pressing action causes the edges of the holes 702 and 502 to "cut into" or deform the outer wall 107 of the tubes 106, creating a secure and stable retention of the tubes 106 within the strain relief device 800.

The tensioning device 600 is designed to maintain the U-part element 700 or the second element 500 in the locked position once the tubes 106 are secured. By maintaining the locked position, the tensioning device 600 ensures that the compressive force on each of the tubes 106 is sustained, preventing their movement or dislodgment due to external forces or vibrations.

When the strain relief device 800 is in the locked position, and the tensioning device 600 is engaged, a portion of each of the tubes 106 extending above the top surface of the second element 500 is able to bend or curve. This bending or curving allows for the easy insertion of cables, optical fibers, or other components into the inner hollow opening of the tubes 106 as mentioned in earlier sections.

To release the tubes 106 from the strain relief device 800 or to adjust their position, the tensioning device 600 is operated to disengage or loosen its hold on the U-part element 700 or the second element 500. This action allows the U-part element 700 or the second element 500 to be displaced horizontally relative to the other, transitioning the strain relief device 800 from the locked position to the unlocked position. In the unlocked position, the holes 702 and 502 are realigned, reducing the compressive force on the tubes 106 and enabling their removal, adjustment, or reinsertion.

The specific implementation of the tensioning device 600 in the strain relief device 800 may vary, depending on the design requirements and the desired level of security and ease of use. As discussed earlier, the tensioning device 600 may be implemented using various mechanisms, such as screw-based systems, lever-operated mechanisms, or spring-loaded devices. The choice of the tensioning device 600 may depend on factors such as the size and layout of the optical fiber distribution cabinet 102, the accessibility of the strain relief device 800, and the preferences of the installation technicians.

The strain relief device 800 also includes brackets 650 providing similar functionality as described in previous embodiments of the strain relief device 200. The brackets 650 support in holding the U-part element 700 and second element 500 in place. The bracket 650 may also feature an opening 651 that may accommodate the rails 712 of the U-part element 700 to be placed in the opening 651 to further secure the U-part element 700 and ensure its proper position and alignment, even under the stress of vibrations or other external forces. In some embodiments, the strain relief device 800 may include components such as fasteners, to ensure proper alignment and secure attachment of the various elements. These components work together to create a cohesive and reliable assembly that effectively manages and protects the tubes 106 and the cables or optical fibers 112 within them.

This embodiment offers a suitable application where space is limited or when managing a smaller number of tubes 106. The strain relief device 800, incorporating the U-part element 700 and the second element 500, functions similarly to the strain relief device 200, securing the tubes 106 in place and preventing movement or slippage.

### Example Flowchart(s)

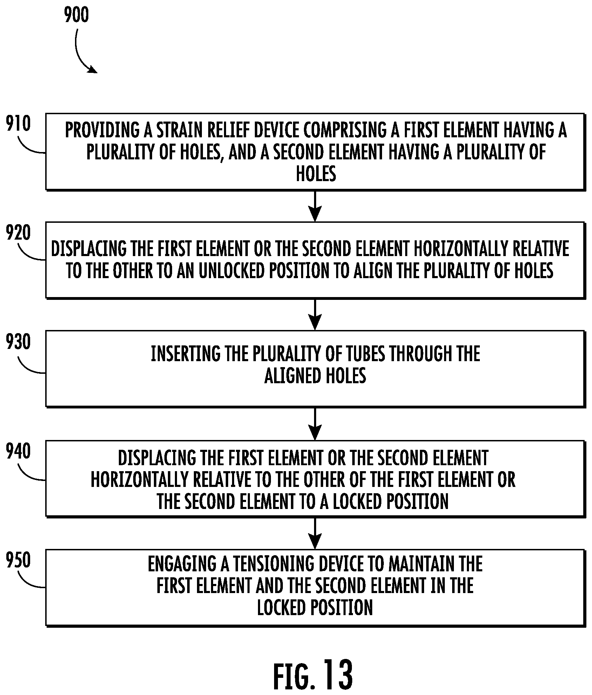

Embodiments of the present disclosure provide various methods for securing a plurality of tubes within an enclosure using a strain relief device, such as described herein. Various examples of the operations performed in accordance with some embodiments of the present disclosure will now be provided with reference to FIG. 13.

FIG. 13 illustrates a flowchart of an example method 900 for securing a plurality of tubes using a strain relief device, such as the strain relief device 200 or assembly 800 described in the previous sections. The method 900 outlines the operations involved in installing and securing the tubes within the strain relief device, ensuring their proper organization and protection within an optical fiber distribution cabinet or similar enclosure.

The method 900 begins at operation 910, which involves providing a strain relief device 200 comprising a first element 400 having a plurality of holes 402 and a second element 500 also having a plurality of holes 502. The first element 400 and the second element 500 may correspond to the first element 400 and the second element 500 described above, respectively, or other embodiments as described in the earlier sections. The holes in both elements are sized and shaped to accommodate the outer diameter of the tubes being secured.

Operation 920 involves displacing the first element 400 or the second element 500 horizontally relative to the other element to achieve an unlocked position. In the unlocked position, the plurality of holes 402 of the first element 400 and the plurality of holes 502 of the second element 500 are aligned, creating clear pathways for the insertion of the tubes 106. This alignment allows for installation, removal, or adjustment of the tubes 106 through the strain relief device 200.

At operation 930, the plurality of tubes 106 are inserted through the aligned holes of the first element 400 and the second element 500. Each of the plurality of tubes 106 comprises an outer wall 107 surrounding an inner hollow opening, which is configured to contain at least one cable or optical fiber. The tubes 106 are guided through the holes 402 and 502 until they extend beyond the top surface of the second element 500, ensuring that they are properly positioned within the strain relief device 200.

Operation 940 involves displacing the first element 400 or the second element 500 horizontally relative to the other element to transition the strain relief device 200 from the unlocked position to a locked position. In the locked position, the plurality of holes 402 of the first element 400 and the plurality of holes 502 of the second element 500 are misaligned, allowing the edges of the plurality of holes of the first element 400 or second element 500 to press into the outer wall 107 of each of the tubes 106 applying a compressive force on the outer wall 107 of each of the plurality of tubes 106 inserted therethrough. This compressive force securely holds the tubes 106 in place, preventing them from being pulled out, twisted, or otherwise displaced.

At operation 950, a tensioning device is engaged with the first element 400 and second element 500 to maintain the first element 400 and the second element 500 in the locked position, thereby securing the plurality of tubes within the strain relief device. The tensioning device, such as the tensioning device 600 described earlier, applies a constant compressive force on the tubes 106 and keeps the first element 400 and the second element 500 in the locked position. This ensures that the compressive force on the tubes 106 is maintained, providing ongoing protection and stability.

The method 900 provides an approach to installing and securing tubes 106 within a strain relief device 200. The use of the strain relief device 200 and the associated method 900 helps to prevent damage, ensure proper cable management, and maintain the integrity of the network connections.

It is worth noting that additional operations or variations may be included in the method 900, depending on the specific requirements of the installation or the design of the strain relief device 200. For example, the method may include operations for preparing the tubes 106 before insertion, such as cutting them to the appropriate length or attaching connectors. Additionally, the method may involve operations for testing the security of the tubes 106 after the strain relief device 200 is locked, to ensure that they are properly retained and protected.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A strain relief device for securing a plurality of tubes within an optical fiber distribution cabinet, wherein each of the plurality of tubes comprises an outer wall surrounding an inner hollow opening configured to contain at least one of a cable or an optical fiber therethrough, the strain relief device comprising:
a first element comprising a top surface and a bottom surface, wherein the first element comprises a plurality of holes that each extend from the top surface to the bottom surface, wherein each of the plurality of holes comprises a diameter larger than an outer diameter of each of the plurality of tubes;
a second element comprising a top surface and a bottom surface, wherein the bottom surface of the second element is positioned above of the top surface of the first element, wherein the second element comprises a plurality of holes that each extend from the top surface to the bottom surface, wherein each of the plurality of holes comprises a diameter larger than the outer diameter of each of the plurality of tubes;
wherein the first element or the second element is movable horizontally relative to the other of the first element or the second element between an unlocked position and a locked position, wherein, when in the unlocked position, the plurality of holes of the first element and the plurality of holes of the second element are aligned to enable insertion or removal of the plurality of tubes in corresponding aligned holes of the plurality of holes of the first element and the plurality of holes of the second element, wherein, when in the locked position, the first element or the second element is displaced horizontally relative to the other of the first element or the second element such that the plurality of holes of the first element and the plurality of holes of the second element apply a compressive force on the outer wall of each of the plurality of tubes inserted therethrough to secure the each of the plurality of tubes therein; and
a tensioning device configured to transition the first element or the second element between the unlocked position and the locked position by adjusting the horizontal position of the first element or the second element relative to the other of the first element or the second element, wherein the tensioning device is further configured to maintain the first element or the second element in the locked position.

2. The strain relief device of claim 1, wherein, when the first element or the second element is in the locked position, the tensioning device secures the first element and the second element in the locked position to maintain the compressive force on each of the plurality of tubes to prevent movement of each of the plurality of tubes in response to external forces.

3. The strain relief device of any one of claims 1-2, wherein, when the first element or the second element is in the locked position, the tensioning device enables a portion of each of the plurality of tubes extending above the top surface of the second element to bend or curve allowing for insertion of the at least one of the cable or the optical fiber into the inner hollow opening.

4. The strain relief device of claim 1, wherein, when the first element or the second element is in the unlocked position, the tensioning device allows the first element or the second element to be displaced horizontally relative to the other of the first element or the second element to reduce the compressive force on each of the plurality of tubes to enable removal, adjustment, or reinsertion of each of the plurality of tubes.

5. The strain relief device of any one of claims 1-3, wherein, when the first element or the second element is in the locked position, an edge of each of the plurality of holes of the first element and an edge of each of the plurality of holes of the second element press into the outer wall of each of the plurality of tubes.

6. The strain relief device of claim 5, wherein the edge of each of the plurality of holes of the first element and the second element cut into the outer wall of each of the plurality of tubes to secure each of the plurality of tubes in a fixed position.

7. The strain relief device of any one of claims 1-6, wherein the tensioning device is accessible from the front of the optical fiber distribution cabinet.

8. The strain relief device of any one of claims 1-7, further comprising a bottom plate wherein the bottom plate comprises a top surface, a bottom surface, a front side, and a rear side, wherein the bottom plate further includes a plurality of openings extending from the top surface to the bottom surface for receiving the plurality of tubes.

9. The strain relief device of claim 8, wherein the top surface of the bottom plate is positioned below the bottom surface of the first element.

10. The strain relief device of any of claims 1-9, wherein the plurality of holes is arranged in at least one row within the first element.

11. A strain relief assembly for securing a plurality of tubes within an optical fiber distribution cabinet, wherein each of the plurality of tubes comprises an outer wall surrounding an inner hollow opening configured to contain at least one of a cable or an optical fiber therethrough, the strain relief assembly comprising:
a strain relief device of any of claims 1-9, wherein the plurality of holes is arranged in at least one row on the top surface.

12. A method for securing a plurality of tubes, the method comprising:
providing a strain relief device of any of claims 1-9;
displacing the first element or the second element horizontally relative to the other of the first element or second element to an unlocked position to align the plurality of holes of the first element and the plurality of holes of the second element,
inserting the plurality of tubes through the aligned holes of the first element and the second element, wherein each of the plurality of tubes comprises an outer wall surrounding an inner hollow opening configured to contain at least one of a cable or an optical fiber;
displacing the first element or the second element horizontally relative to the other of the first element or the second element to a locked position such that the plurality of holes of the first element and the plurality of holes of the second element apply a compressive force on the outer wall of each of the plurality of tubes inserted therethrough to secure the each of the plurality of tubes therein; and
engaging a tensioning device to maintain the first element and the second element in the locked position to secure the plurality of tubes within the strain relief device.
